# EUROPEAN PATENT SPECIFICATION

(11) **EP 3 755 929 B1**
(45) Date of publication and mention of the grant of the patent: **08.04.2026**
(21) Application number: 19708605.1
(22) Date of filing: 19.02.2019
(51) Int. Cl.: F16K 11/074, F16K 3/04

(54) **DIRECTIONAL CONTROL VALVE**
WEGEVENTIL
SOUPAPE DE COMMANDE DIRECTIONNELLE

(30) Priority: 22.02.2018 GB 201802911
(43) Date of publication of application: 30.12.2020
(73) Proprietor: Aker Solutions Limited, London, Greater London W4 5HR (GB)
(72) Inventor: WILSON, Grant, Aberdeenshire AB42 2AT (GB); KENT, Paul, Houston, Texas 77095 (US); HALDANE, Gordon, Weston-super-Mare, Somerset BS22 7PQ (GB); JALISI, Ismail, London NW9 0NE (GB)
(74) Representative: Schlumberger Intellectual Property Department
(86) International application number: PCT/GB2019/050436
(87) International publication number: WO 2019/162656

(56) References cited:
- EP-A1- 1 180 625
- WO-A1-03/036145
- GB-A- 2 378 744
- GB-A- 2 524 038
- US-A- 2 516 411
- US-A- 3 796 257
- US-A- 4 546 954
- US-A- 4 848 404

## Description

The present invention relates to a system with a directional control valve for use in Subsea Control Modules (SCMs) and/or subsea installations such as manifolds associated with subsea wells.

Control valves are commonly used in many industries but the subsea industry is always challenging. The physical and operational parameters of any device including a control valve must be optimised for durability and reliability, especially due to the increased complexity of service and maintenance during and after deployment of any piece of subsea equipment.

The high pressures faced in subsea environments mean that SCMs are typically compact and so the physical space for control valve components comes at a premium. In this environment, the availability of electrical power is also generally more limited than for non-subsea control valves.

GB2378744 discloses a control valve for controlling the flow of fluid to a fluid-operated actuator, wherein the valve is provided with energy storage means which, in the event of a failure of the supply of fluid to the valve if the valve is in an open condition, uses stored energy to cause a vent to be open.

US4546954 discloses an engine air cut-off valve comprising: a flat housing formed by a hollow body, having a main wall and an upstanding side wall extending along the entire perimeter of the main wall, and a flat cover secured thereto and generally parallel to the main wall, said housing defining an internal chamber and having upstream and downstream walls which are opposed and form inlet and outlet ports respectively; and a valve assembly comprising a gate located in a gate end of the chamber.

US4848404 discloses a bistable hydraulic slide valve comprising a body, including a slide chamber in the body supply, return and function ports to the chamber supply, return and function lines connected to the respective ports, an apertured slide member, wherein when the slide member is in the vicinity of a first operating position, the supply port is coupled to the function port by way of the aperture in the slide member and a holding port is disposed adjacent the function port and aligned with the aperture to receive from the supply port liquid at the same pressure as the function port.

According to a first aspect of the invention, there is provided a system comprising a subsea rotary directional control valve and a device connected to the subsea rotary directional control valve, as defined by the claims. The rotary directional control valve comprises:
a valve member rotatable between a first position where supply and function hydraulic ports are not in fluid communication with each other, and a second position where supply and function ports are in fluid communication with each other to direct hydraulic supply fluid to the function hydraulic port for hydraulically operating a function of the device connected to the subsea rotary directional control valve;
a return valve stem contactable with the valve member;
a resilient member, such as a spring, contactable with the return valve stem for urging the return valve stem towards the valve member; and
a valve stop, the valve member being contactable with the valve stop;
and wherein the device comprises a subsea actuator driven by the subsea rotary directional control valve.

The return valve stem valve member may contact the valve member at its proximal end. In alternative embodiments, not covered by the claims, the rotary directional control valve can be assembled without a resilient member and/or return valve stem, allowing the rotary control valve to be "fail-as-is" maintaining the current valve position.

The contact may be direct or indirect e.g. the action is through an intermediate member.

The return valve stem may contact the valve member at one end and the resilient member at an opposite end.

A portion of the return valve stem is normally provided in a chamber, and fluid may be deliverable to the chamber.

A flange may be provided on the distal end of the return valve stem (from the valve member) separating the chamber into a first sub-chamber and a second sub-chamber.

The first sub-chamber is normally closest to the proximal end of the return valve stem. The second sub-chamber typically houses the resilient member.

For certain embodiments, a seal is provided between the flange and the chamber. This is normally provided between an outer surface of the flange especially at the distal end of the return valve stem and the inner surface of the chamber. The flange may comprise the seal.

For certain embodiments, a seal is not necessary, and the flange if provided, can provide a contact face for the resilient member and the sub-chambers can be pressure balanced. The resilient member would act as an "active spring" in such embodiments.

Supply fluid may be deliverable to the chamber especially the first chamber. The supply fluid can urge the flange and return valve stem against the action of the resilient member. In this way, the motor does not need to be so powerful and/or consume so much energy.

The supply fluid to the supply port and/or the chamber is typically at a pressure greater than atmospheric pressure, normally from 207bar (3,000psi) to 1035bar (15,000psi), typically from 345bar (5,000psi) to 689bar (10,000psi). There may be and/or there may be in use, friction between one or more shear seals and an inner surface of the chamber. Supply fluid in the chamber and typically supply fluid at a pressure greater than atmospheric pressure in the chamber may help to reduce the friction between the one or more shear seals and the inner surface of the chamber.

The second sub-chamber may be ported to the return port.

The resilient member is normally contactable with the distal end of the return valve stem. The resilient member is typically a spring using compressive or tensile force.

The resilient member may comprise a hydraulic system. The resilient member may be hydraulically biased.

The rotary directional control valve further comprises a valve stop. The valve member is typically contactable with the valve stop.

The valve stop is typically contactable with the valve member at a first side of the valve member. The return valve stem is typically contactable with the valve member at a second side of the valve member. The second side of the valve member is typically opposite the first side of the valve member.

For embodiments (not covered by the claims) where a return valve stem is not provided, a further stop may be provided instead, normally on the second side of the valve member, in order to limit rotation of the valve member.

The first and second positions may be closed and open positions respectively but the alternative is also configurable - the first and second positions can be open and closed positions respectively.

Whilst other shapes can be used, the valve member is may be in particular one or more of lobe, tear, and teardrop shaped component. The one or more of lobe, tear, and teardrop shaped valve member normally has a tapered end and a bulbous end. The valve member is normally substantially rounded at its bulbous end. The first side of the valve member where the valve stop is typically contactable with the valve member and the second side of the valve member where the return valve stem is typically contactable with the valve member are typically at the bulbous end of the valve member. The valve member is normally pivotable about a pivot point towards the tapered end of the valve member.

The valve member is typically rotatable about a pivot point. The valve member is normally rotatable up to 90 degrees, or less than 50 degrees, optionally less than 30 degrees. The angle of rotation may be and/or may be referred to a small angle.

The valve member is typically moveable by a solenoid or a motor which may form part of the overall apparatus of the rotary directional control valve. The motor is preferably a rotational direct drive motor. The motor is preferably a primary motor drive. The valve member is typically coupled to, and movable by, the motor and/or a motor armature of the motor. In use a direct drive motor may assist in reducing vibration of the valve member, and increase the positional accuracy with which the valve member may be moved. The motor may be a rotary motor.

A rotational coupling between the motor and the valve member, can be a direct mechanical or a magnetic coupling.

The motor may be a stepper motor or a torque motor. The stepper or torque motor is typically moveable and/or rotatable between predefined positions, and is capable of holding its position with or without a supply of electrical power. The stepper or torque motor is typically reversible and/or is capable of being back-driven. The motor may be back-driven by the return valve stem and/or whilst the motor is not being powered. That is, the valve member is normally moveable by the motor in both directions whilst the motor is being powered, and moveable in at least an opposing direction by an external force whilst the motor is not being powered. The external force is typically the resilient member.

The motor is normally electronically controlled to provide for stepping action.

The motor may be a piezoelectric motor.

It may be an advantage of the present invention that the motor is a stepper or torque motor. Rotary action of the valve member about the pivot point and in particular rotary action provided by a stepper or torque motor may generate significantly more force for the electrical power available compared to other motors of a similar size.

A stepper or torque motor typically obviates the use of solenoids actuating the valve member, and furthermore the valve member may be moved in two directions, that is between first and second positions, without the use of two solenoids. Since such solenoid(s) are not required, pilot line(s) are not required.

It may be a further advantage of the present invention that dirt sensitive pilot stages of a directional control valve are not required and so the valve is more tolerant to dirt. The elimination of solenoid valves and the associated micro-hydraulics helps provide this advantage.

In use, the motor is normally used to rotate the valve member, moving the valve member and in so doing moving the return valve stem, where present, and compressing the resilient member. In use, the resilient member is normally used to urge the return valve stem towards the valve member, moving the valve member to contact the valve stop. The resilient member typically exerts a force on the return valve stem. This force is typically dominant when fluid supply and/or fluid supply pressure is removed or lost.

The valve member is rotatable between at least two positions. The at least two positions are typically pre-set positions. The rotary directional control valve has a supply fluid port, a function fluid port and normally a return fluid port. The valve member is rotatable, such that in a first position the valve member does not provide fluid communication between the supply port, and the function port, that may be a closed position and/or a de-energized position. Instead, it may provide communication between the function port and the return port. In the second position the valve member provides fluid communication between the supply port and the function port, that may be an open position and/or an energized position. However, the ports may be provided in any configuration.

The valve member may be referred to as a spool assembly. The valve member may be housed in a chamber. The valve member may comprise one or more shear seals for sealing the valve member with one or more of the supply fluid port, return fluid port and function fluid port in fluid communication with the chamber. In use, this typically allows fluid communication between the supply port and the function port or the function port and the return port (also referred to as the vent port). There may be more than one supply fluid port. The valve member may comprise two shear seals. The two shear seals may be the same or at least similar size and/or diameter. The return fluid port may be and/or may be referred to as an exhaust port.

In use, the supply fluid port is typically used to deliver a supply fluid, the return fluid port is typically used to discharge supply fluid from the function port, and the function fluid port is typically used to direct supply fluid to a device connected to the rotary directional control valve. In use, the rotary directional control valve may be part of a Subsea Control Module (SCM),the device typically operates a function within a Subsea Control Module (SCM). The device may be a production tree actuator valve.

The chambers normally contain fluid. The first and/or second chamber may contain fluid.

It may be an advantage of the present invention that in use, when the force exerted by the resilient member on the return valve stem is at least partially counteracted and/or offset, a force required to be exerted by the rotary motor to move the valve member is reduced. When the force required is reduced it may also be that less energy is required to be supplied to rotate the valve member and in turn this usually means less electrical power is required to operate the motor.

It may be an advantage of the present invention that less electrical power is required, particularly when the rotary directional control valve is part of or at least connected to a Subsea Control Module. Electrical power subsea is often limited and so a rotary directional control valve that requires less electrical power than a conventional directional control valves is preferred.

Fluid may be deliverable to the second sub-chamber or the pressurized fluid supplied to the first sub-chamber is removed or lost, the resilient member will return the valve to a failsafe first position. Where fluid is deliverable to the second sub-chamber, the return fluid is typically at a pressure greater than atmospheric pressure

In use, return fluid in the second sub-chamber, and typically return fluid in the second sub-chamber at a pressure greater than atmospheric pressure, typically at least partially aids the force exerted by the resilient member on the return valve stem.

When the supply fluid is deliverable by the supply fluid port and deliverable to the first sub-chamber and return fluid is deliverable by the return fluid port and deliverable to the second sub-chamber, the rotary directional control valve may be referred to as pressure balanced and/or pressure balanced across the valve member.

The return valve stem may be or may be referred to as a safety piston, a reset piston or a fail-safe piston. The resilient member contactable with the return valve stem for urging the return valve stem towards the valve member may be spring-loaded towards engagement with the spool, providing rotation to the first optionally de-energized positon.

The rotary directional control valve described herein may be especially for use in Subsea Control Modules, but also Manifold Control Modules or High integrity Pressure Protection System. It may be provided in an oil-filled container.

Embodiments of the invention will now be described by way of example only and with reference to the accompanying drawings, in which:
Fig. 1a is a cross-sectional view of a first embodiment of a rotary directional control valve in a closed position for a system according to the present invention;
Fig. 1b is a cross-sectional view of the Fig. 1a rotary directional control valve in an open position;
Fig. 2 is a cross-sectional view of a second embodiment of a rotary directional control valve in a closed position;
Fig. 3 is a cross-sectional view of a third embodiment (not forming part of the claimed invention) of a rotary directional control valve in a closed position.

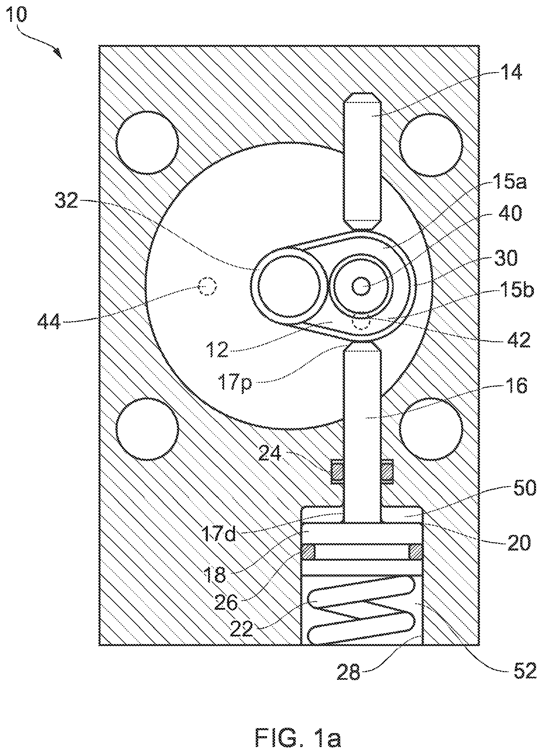

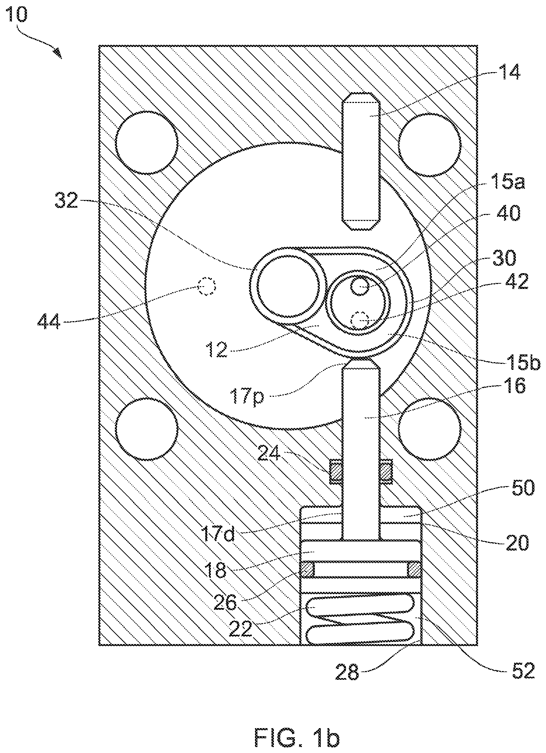

Fig. 1 shows a rotary directional control valve 10 comprising a valve member 12 and a return valve stem 16 in contact at its proximal end 17p with the valve member 12. There is a valve stop 14 also in contact with the valve member 12. The return valve stem 16 is sealed against a surrounding bore by a first seal 24. A portion of the distal end 17d of the return valve stem 16 is in a chamber 20. A resilient member 22 is in contact with the return valve stem 16 and is used to urge the return valve stem 16 towards the valve member 12. The resilient member 22 is a spring. In use, when the valve member 12 moves, the return valve stem 16 also moves.

The rotary directional control valve 10 is part of a Subsea Control Module (SCM) (not shown).

The valve stop 14 contacts the valve member 12 at a first side 15a of the valve member. The return valve stem 16 contacts the valve member 12 at a second side 15b of the valve member. The second side 15b of the valve member 12 is opposite the first side 15a of the valve member.

The valve member 12 is lobe shaped. The first side 15a and the second side 15b of the valve member 12 are at the bulbous end 30 of the valve member. The valve member 12 is pivotable about a point towards the tapered end 32 of the valve member.

The return valve stem 16 has flange 18 at its distal end. The flange of the return valve stem 16 is in the chamber 20. An outer surface of the flange 18 at the distal end of the return valve stem 16 contacts an inner surface of the chamber 28. The outer edge of the flange has a second seal 26, providing a fluid seal between the flange 18 and the inner surface of the chamber 28.

The valve member 12 is rotated about its pivotal end towards the return valve member 16 by a motor (not shown). The motor is a stepper motor. The stepper motor (not shown) is used to move the valve member 12, moving the valve member also moves the return valve stem 16, compressing the spring 22 so that the valve member takes up the position shown in Fig. 1b. The stepper motor can be used to rotate the valve member in the opposite direction.

In this way, the valve member is rotatable to provide fluid communication with a supply fluid port 40, a function fluid port 42. The skilled person understands how a directional control valve operates and the necessary components, including supply, function and return ports.

The second seal 26 of the return valve flange 18 divides the chamber 20 into two sub-chambers. A first sub-chamber 50 is closest to the proximal end 17p of the return valve stem 16. A second sub-chamber 52 is farthest from the distal end 17d of the return valve stem 16. The spring 22 is in the second sub-chamber 52. The first and second chambers contain fluid (not shown).

In use supply fluid (not shown) is delivered to the valve member 12 by the supply fluid port 40 and also delivered to the first sub-chamber 50. The supply fluid (not shown) in the first sub-chamber 50, partially offsets the force exerted by the spring 22 on the return valve stem 16. Less energy and/or electrical power is therefore required to be supplied to the motor (not shown) to move the valve member 12.

In this embodiment, return fluid (not shown) in the second sub-chamber 52 partially aids the force exerted by the spring 22 on the return valve stem 16, helping to move the valve member 12 back to the position, as shown in Fig. 1.

Therefore, an advantage of the embodiments such as that shown in Fig. 1a is that if the hydraulic supply should fail, the spring 22 will return the valve member back to the Fig. 1 closed position. For such an embodiment the spring functions as a "passive spring". In alternative embodiments, the ports can be reconfigured so that the Fig. 1a position is an open position and in the event of failure, the valve returns to an open position.

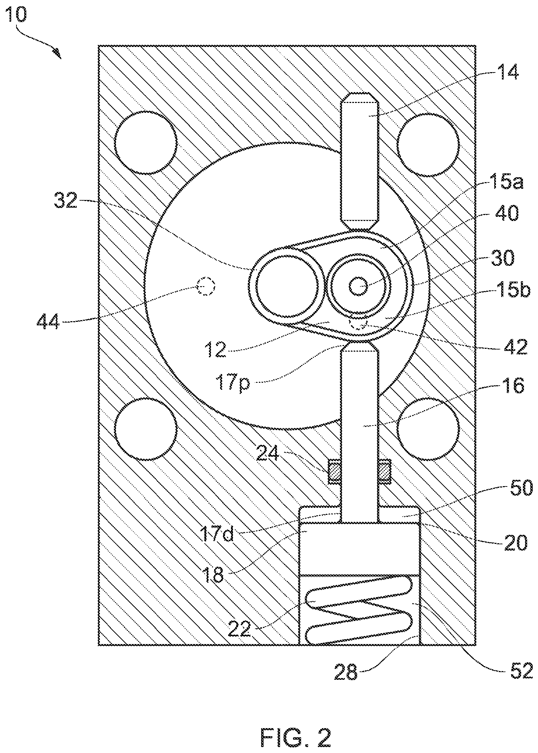

Fig. 2 shows a second embodiment of the present invention, and like parts will not be described again for brevity.

In contrast, to Fig. 1, there is no seal on the flange 18, and so the two sub-chambers 50 and 52 are pressure balanced. The Fig. 2 embodiment functions in the same way. However, in the event that the stepper motor loses power, the spring 22 will act on the valve stem 16 to return the valve member 12 to the closed position.

Thus the invention provides a number of embodiments with different options which can be used as required.

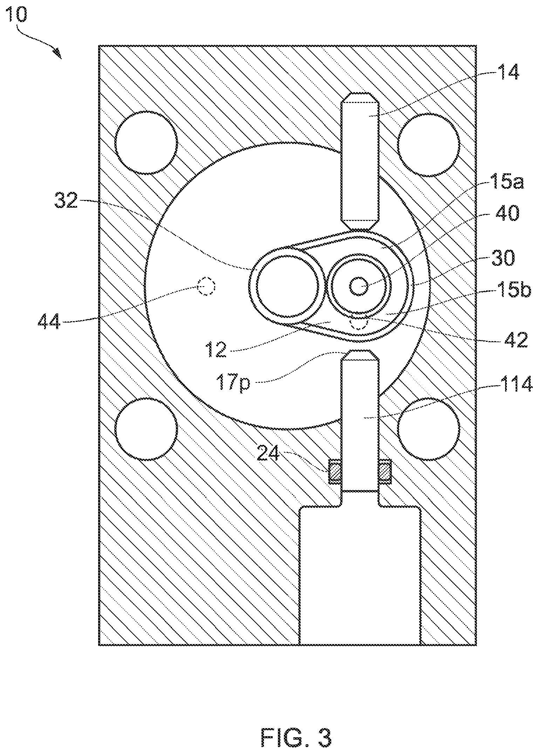

The arrangement of Fig. 3 (which is outside the scope of the claims) is a further alternative and like parts will not be described further for brevity. In contrast to the embodiments referred to above, there is no valve stem or associated flange or spring. A further stop 114 is provided to limit rotation of the valve. Should the valve fail for any reason, the valve member will remain in the position it was in before the failure occurred.

Moreover, valve member 12, ports 40, 42, 44, motor (not shown) and end stop are common to all embodiments providing a standardised body. The remaining parts can be interchanged as necessary for the particular application. Redundant porting can be plugged as required.

Modifications and improvements can be incorporated herein without departing from the scope of the present invention as defined by the appended claims.

## Claims

1. A system comprising:
a subsea rotary directional control valve (10); and
a device connected to the subsea rotary directional control valve (10);
wherein the subsea rotary directional control valve (10) comprises:
a valve member (12) rotatable between a first position where supply and function hydraulic ports (40, 42) are not in fluid communication with each other, and a second position where supply and function hydraulic ports (40, 42) are in fluid communication with each other to direct hydraulic supply fluid to the function hydraulic port (42) for hydraulically operating a function of the device connected to the subsea rotary directional control valve (10);
and wherein the device comprises a subsea actuator driven by the subsea rotary directional control valve (10); **characterised in that** the subsea rotary directional control valve (10) further comprises:
a return valve stem (16) contactable with the valve member (12);
a resilient member (22), such as a spring, contactable with the return valve stem (16) for urging the return valve stem (16) towards the valve member (12); and
a valve stop (14), the valve member (12) being contactable with the valve stop (14).

2. The system as claimed in claim 1, wherein at least a portion of the return valve stem (16) is provided in a chamber (20), wherein fluid is deliverable to the chamber (20), optionally wherein the fluid is at a pressure of from 207bar (3,000psi) to 1035bar (15,000psi).

3. The system as claimed in claim 2, wherein the return valve stem (16) comprises a flange (18) in the chamber (20), separating the chamber (20) into a first sub-chamber (50) and a second sub-chamber (52), optionally wherein the second sub-chamber (52) houses the resilient member (22).

4. The system as claimed in claim 3, wherein a seal (26) is provided between the flange and the chamber.

5. The system as claimed in claim 3 or 4, wherein supply fluid is deliverable to the first sub-chamber (50) to urge the flange (18) against the action of the resilient member (22).

6. The system according to any preceding claim wherein the valve member (12) comprises one or more shear seals for sealing the valve member (12) with one or more of: the supply fluid port (40), return fluid port (44) and function fluid port (42) in fluid communication with the chamber.

7. The system according to any preceding claim wherein the valve member (12) is one or more of lobe, tear, and teardrop shaped.

8. The system according to any preceding claim wherein the valve member (12) is rotatable less than 90 degrees about a pivot point.

9. The system according to any preceding claim wherein the valve member (12) is moveable by a motor, the subsea rotary directional control valve (10) optionally comprising the motor.

10. The system according to claim 9, wherein the motor comprises at least one of a stepper motor and torque motor.

11. The system according to any preceding claim wherein the first and second positions are closed and open positions respectively.

12. A system as claimed in in any one of claims 1 to 11, wherein the system comprises a control module comprising the subsea rotary directional control valve (10); and the control module is a subsea control module or manifold control module.

13. A high integrity pressure protection system comprising the system as claimed in any one of claims 1 to 11.

## Patentansprüche

1. System, umfassend:
ein Unterwasser-Drehrichtungssteuerventil (10); und
eine Vorrichtung, die mit dem Unterwasser-Drehrichtungssteuerventil (10) verbunden ist;
wobei das Unterwasser-Drehrichtungssteuerventil (10) umfasst:
ein Ventilelement (12), das zwischen einer ersten Position, in der Versorgungs- und Funktionshydraulikanschlüsse (40, 42) nicht in Fluidverbindung miteinander stehen, und einer zweiten Position, in der Versorgungs- und Funktionshydraulikanschlüsse (40, 42) in Fluidverbindung miteinander stehen, um Hydraulikversorgungsfluid zu dem Funktionshydraulikanschluss (42) zu leiten, um eine Funktion der mit dem Unterwasser-Drehrichtungssteuerventil (10) verbundenen Vorrichtung hydraulisch zu betätigen, drehbar ist;
und wobei die Vorrichtung einen Unterwasser-Aktuator umfasst, der von dem Unterwasser-Drehrichtungssteuerventil (10) angetrieben wird; **dadurch gekennzeichnet, dass** das Unterwasser-Drehrichtungssteuerventil (10) ferner umfasst:
einen Rückschlagventilschaft (16), der mit dem Ventilelement (12) in Kontakt bringbar ist;
ein Federelement (22), wie eine Feder, das mit dem Rückschlagventilschaft (16) in Kontakt bringbar ist, um den Rückschlagventilschaft (16) in Richtung des Ventilelements (12) zu drängen; und
einen Ventilanschlag (14), wobei das Ventilelement (12) mit dem Ventilanschlag (14) in Kontakt bringbar ist.

2. System nach Anspruch 1, wobei mindestens ein Abschnitt des Rückschlagventilschafts (16) in einer Kammer (20) bereitgestellt ist, wobei Fluid an die Kammer (20) lieferbar ist, optional wobei das Fluid bei einem Druck von 207 bar (3.000 psi) bis 1035 bar (15.000 psi) ist.

3. System nach Anspruch 2, wobei der Rückschlagventilschaft (16) einen Flansch (18) in der Kammer (20) umfasst, der die Kammer (20) in eine erste Unterkammer (50) und eine zweite Unterkammer (52) trennt, optional wobei die zweite Unterkammer (52) das Federelement (22) aufnimmt.

4. System nach Anspruch 3, wobei eine Dichtung (26) zwischen dem Flansch und der Kammer bereitgestellt ist.

5. System nach Anspruch 3 oder 4, wobei Versorgungsfluid an die erste Unterkammer (50) lieferbar ist, um den Flansch (18) gegen die Wirkung des Federelements (22) zu drängen.

6. System nach einem der vorstehenden Ansprüche, wobei das Ventilelement (12) eine oder mehrere Scherdichtungen zum Abdichten des Ventilelements (12) mit einem oder mehreren umfasst von: dem Zuführfluidanschluss (40), Rückführfluidanschluss (44) und Funktionsfluidanschluss (42) in Fluidverbindung mit der Kammer.

7. System nach einem der vorstehenden Ansprüche, wobei das Ventilelement (12) eines oder mehrere von Lappen-, Riss- und Tropfenform aufweist.

8. System nach einem der vorstehenden Ansprüche, wobei das Ventilelement (12) um weniger als 90 Grad um einen Drehpunkt drehbar ist.

9. System nach einem der vorstehenden Ansprüche, wobei das Ventilglied (12) durch einen Motor bewegbar ist, wobei das Unterwasser-Drehrichtungssteuerventil (10) optional den Motor umfasst.

10. System nach Anspruch 9, wobei der Motor mindestens eines von einem Schrittmotor und Drehmomentmotor umfasst.

11. System nach einem der vorstehenden Ansprüche, wobei die erste und zweite Position geschlossene bzw. offene Positionen sind.

12. System nach einem der Ansprüche 1 bis 11, wobei das System ein Steuermodul umfasst, das das Unterwasser-Drehrichtungssteuerventil (10) umfasst; und das Steuermodul ein Unterwasser-Steuermodul oder Verteiler-Steuermodul ist.

13. Druckschutzsystem mit hoher Integrität, das das System nach einem der Ansprüche 1 bis 11 umfasst.

## Revendications

1. Système comprenant :
une soupape de commande directionnelle rotative sous-marine (10) ; et
un dispositif relié à la soupape de commande directionnelle rotative sous-marine (10) ;
dans lequel la soupape de commande directionnelle rotative sous-marine (10) comprend :
un élément de soupape (12) pouvant tourner entre une première position où des orifices hydrauliques d'alimentation et de fonction (40, 42) ne sont pas en communication fluidique l'un avec l'autre, et une seconde position où des orifices hydrauliques d'alimentation et de fonction (40, 42) sont en communication fluidique l'un avec l'autre afin de diriger un fluide d'alimentation hydraulique vers l'orifice hydraulique de fonction (42) pour actionner hydrauliquement une fonction du dispositif relié à la soupape de commande directionnelle rotative sous-marine (10) ;
et dans lequel le dispositif comprend un actionneur sous-marin entraîné par la soupape de commande directionnelle rotative sous-marine (10) ; **caractérisé en ce que** la soupape de commande directionnelle rotative sous-marine (10) comprend en outre :
une tige de soupape de retour (16) pouvant entrer en contact avec l'élément de soupape (12) ;
un élément élastique (22), tel qu'un ressort, pouvant entrer en contact avec la tige de soupape de retour (16) pour pousser la tige de soupape de retour (16) vers l'élément de soupape (12) ; et
une butée de soupape (14), l'élément de soupape (12) pouvant entrer en contact avec la butée de soupape (14).

2. Système selon la revendication 1, dans lequel au moins une partie de la tige de soupape de retour (16) est prévue dans une chambre (20), dans lequel un fluide peut être distribué à la chambre (20), optionnellement, dans lequel le fluide est à une pression de 207 bar (3 000 psi) à 1 035 bar (15 000 psi).

3. Système selon la revendication 2, dans lequel la tige de soupape de retour (16) comprend un rebord (18) dans la chambre (20), séparant la chambre (20) en une première sous-chambre (50) et une seconde sous-chambre (52), optionnellement, dans lequel la seconde sous-chambre (52) loge l'élément élastique (22).

4. Système selon la revendication 3, dans lequel un joint (26) est prévu entre le rebord et la chambre.

5. Système selon la revendication 3 ou 4, dans lequel un fluide d'alimentation peut être distribué à la première sous-chambre (50) afin de pousser le rebord (18) contre l'action de l'élément élastique (22).

6. Système selon l'une quelconque revendication précédente, dans lequel l'élément de soupape (12) comprend un ou plusieurs joints de cisaillement destinés à sceller l'élément de soupape (12) avec l'un ou plusieurs parmi : l'orifice de fluide d'alimentation (40), l'orifice de fluide de retour (44) et l'orifice de fluide de fonction (42) en communication fluidique avec la chambre.

7. Système selon l'une quelconque revendication précédente, dans lequel l'élément de soupape (12) est l'une ou plusieurs parmi une forme de lobe, de larme ou de goutte d'eau.

8. Système selon l'une quelconque revendication précédente, dans lequel l'élément de soupape (12) peut tourner à moins de 90 degrés autour d'un point de pivotement.

9. Système selon l'une quelconque revendication précédente, dans lequel l'élément de soupape (12) peut se déplacer par un moteur, la soupape de commande directionnelle rotative sous-marine (10) comprenant optionnellement le moteur.

10. Système selon la revendication 9, dans lequel le moteur comprend au moins l'un d'un moteur pas à pas et d'un moteur couple.

11. Système selon l'une quelconque revendication précédente, dans lequel les première et seconde positions sont des positions fermée et ouverte, respectivement.

12. Système selon l'une quelconque des revendications 1 à 11, dans lequel le système comprend un module de commande comprenant la soupape de commande directionnelle rotative sous-marine (10) ; et le module de commande est un module de commande sous-marin ou un module de commande de collecteur.

13. Système de protection contre une pression à haute intégrité comprenant le système selon l'une quelconque des revendications 1 à 11.
